# EUROPÄISCHE PATENTANMELDUNG

(11) **EP 4 177 189 A1**
(43) Veröffentlichungstag der Anmeldung: **10.05.2023**
(21) Anmeldenummer: 22205282.1
(22) Anmeldetag: 03.11.2022
(51) Int. Cl.: B65G 19/02, B65G 19/22

(54) **FÖRDERANLAGE MIT EINER MITNEHMERVORRICHTUNG ZUM MITNEHMEN VON LAUFWAGEN**

(30) Priorität: 03.11.2021 CH 0704992021; 06.07.2022 CH 8092022
(71) Anmelder: FERAG AG, 8340 Hinwil (CH)
(72) Erfinder: FENILE, Roberto, 8623 Wetzikon (CH)
(74) Vertreter: Rentsch Partner AG

(57) **Zusammenfassung**

Die vorliegende Erfindung bezieht sich auf eine Förderanlage (1) zum Fördern von Gegenständen, welche eine Transportvorrichtung zum Transport von Gegenständen entlang einer vorgegebenen Strecke umfasst. Die Transportvorrichtung umfasst mindestens eine Laufschiene (111) sowie wenigstens einen an der Laufschiene (111) anbringbaren Laufwagen (112). Der Laufwagen (112) ist dazu konfiguriert entlang der Laufschiene (111) in einer Förderrichtung (F) zu laufen und mindestens einen Gegenstand zu fördern. Die Förderanlage (1) umfasst weiter eine zumindest bereichsweise entlang der Laufschiene (111) angeordnete und antreibbare Mitnehmervorrichtung (12) zum Mitnehmen des Laufwagens (112) der Transportvorrichtung (11). Die Mitnehmervorrichtung (12) umfasst mindestens ein Mitnehmerelement (121) mit einer frei drehbaren Mitnehmerrolle (122), wobei die frei drehbare Mitnehmerrolle (122) mit dem Laufwagen (112) in Eingriff (E) bringbar ist um den Laufwagen (112) dabei entlang der Laufschiene (111) mitzunehmen.

## Beschreibung

### GEBIET DER ERFINDUNG

Die vorliegende Erfindung bezieht sich auf das Gebiet der Fördertechnik. Sie betrifft eine Förderanlage.

### HINTERGRUND DER ERFINDUNG

Für die automatische Beförderung von Gegenständen, insbesondere von hängend transportierten Gegenständen, entlang von durch einen Raum geführten Schienen ist aus dem Stand der Technik eine Vielzahl von Systemen bekannt. Typischerweise werden hierbei Gegenstände an Laufwagen hängend, durch eine zumindest bereichsweise parallellaufende, angetriebene und mit den Laufwagen in Eingriff stehende Mitnehmervorrichtung entlang einer Transportschiene mitgenommen. Die bekannten, üblicherweise hakenförmigen Mitnehmerelemente müssen an einer geplanten Haltestation des Laufwagens oder beim Auftreten eines Hindernisses aktiv ausser Eingriff genommen werden.

DE102005006455A1 offenbart ein Transportsystem für hängende Gegenstände, insbesondere für auf Bügeln hängende Kleidungsstücke, mit einer Transportschiene, mit einer in der Transportschiene in einer Förderrichtung bewegbar angeordneten Antriebskette, die nach unten ragende Mitnehmer aufweist, und mit in der Transportschiene unterhalb der Antriebskette mittels Laufrollen geführten, mittels der Antriebskette in Förderrichtung bewegbaren Halteelementen für die Gegenstände. Das Transportsystem zeichnet sich dadurch aus, dass die Mitnehmer bolzenartig ausgebildet sind, dass die Halteelemente nur um ein Paar Laufrollen pendelnd in der Transportschiene gelagert sind und nach oben ragende Ansätze zum Eingriff in die Antriebskette zwischen zwei benachbarten Mitnehmern aufweisen und dass zwischen der Transportschiene und den Halteelementen Mittel vorgesehen sind, die ein Aussereingriffbringen von Ansatz und Mitnehmer bei einer vorgegebenen Maximalneigung des Halteelementes gegenüber einer Normalen auf der Transportschiene in einer durch die Förderrichtung aufgespannten vertikalen Transportebene verhindern.

DE20317972U1 beschreibt eine Hängeförderanlage mit einer Förderschiene, einer oberhalb der Förderschiene angeordneten, antreibbaren Fördereinrichtung, an der Fördereinrichtung angebrachten, zur Förderschiene gerichteten Klinkenmitnehmern zum Transport von auf der Förderschiene verschiebbar befindlichen Bügelhaken in einer Förderrichtung, wobei jeder Klinkenmitnehmer einen mit der Fördereinrichtung verbundenen Träger und eine Klinke aufweist, die einen in Förderrichtung nacheilenden Mitnehmerhaken aufweist und die mittels einer Schwenkachse am Träger ist, die seitlich und oberhalb der Förderschiene und unter einem spitzen Winkel von höchstens 60° zur Förderrichtung angeordnet ist.

EP3186036B1 beschreibt eine Förderanlage für den Transport von Gegenständen, insbesondere Waren, entlang einer vorgegebenen Strecke, welche eine Laufschiene sowie wenigstens einen auf dieser Laufschiene laufenden, entlang der Laufschiene frei beweglichen Laufwagen umfasst, sowie weiterhin eine angetriebene Eingreifvorrichtung, welche sich zumindest abschnittsweise entlang der Laufschiene erstreckt und eine Mehrzahl von entlang der Laufschiene bewegbaren Eingreifelementen umfasst, die zum Steuern der Bewegung des wenigstens einen Laufwagens mit dem Laufwagen in Eingriff gebracht werden können.

### DARSTELLUNG DER ERFINDUNG

Die bekannten Mitnehmervorrichtungen von Förderanlagen arbeiten mit Mitnehmerelementen, die beim Auftreten eines Hindernisses den Eingriff auflösen und in eine Eingriffs-Grundstellung zurückfallen. Die bekannten Systeme arbeiten hierbei mit hakenförmigen Mitnehmerelementen, welche zwischen mindestens zwei Positionen verstellbar angeordnet sind.

Der Stellungswechsel zwischen der Eingriffsstellung und einer geöffneten Stellung ist mit einer unerwünschten Geräuschentwicklung verbunden, weil beim hin-und herwechseln zwischen den beiden Positionen ein ratterndes Geräusch entsteht. Weiterhin neigen die hakenförmigen Mitnehmerelemente dazu lokal zu verschleissen.

Eine Aufgabe der Erfindung kann darin gesehen werden die Geräuschentwicklung der Mitnehmervorrichtung zu verringern.

Eine erfindungsgemässe Förderanlage zum Fördern von Gegenständen umfasst eine Transportvorrichtung zum Transport von Gegenständen entlang einer vorgegebenen Strecke. Vorzugsweise handelt es sich bei der Transportvorrichtung um einen Hängeförderer.

Die Transportvorrichtung umfasst zum Fördern von Gegenständen mindestens eine Laufschiene sowie wenigstens einen an der Laufschiene anbringbaren Laufwagen. Gute Resultate hinsichtlich der Laufruhe und Spurttreue können erzielt werden, wenn das Querschnittsprofils der Laufschiene wenigstens drei miteinander verbundene Profilabschnitte umfasst.

Vorzugsweise weist die Laufschiene einen ersten seitlich nach aussen offenen Profilabschnitt zur Aufnahme von ersten Rollen des Laufwagens, einen zweiten seitlich nach aussen offenen Profilabschnitt zur Aufnahme von zweiten Rollen des Laufwagens und einen dritten in vertikaler Richtung offenen Profilabschnitt zur Aufnahme von dritten Rollen des Laufwagens auf.

In einer bevorzugten Variante sind der erste und der zweite Profilabschnitt der Laufschiene spiegelsymmetrisch zu einer vertikalen Mittelebene der Laufschiene angeordnet. Ein derartiger Aufbau der Schiene und des dazu korrespondierenden Laufwagens ermöglicht es auch schwere Lasten spurtreu und schlingerfrei zu fördern.

Die Laufschiene kann hierbei einstückig ausgebildet sein und durch Biegen eines Metallbandes oder eines Metallstreifens hergestellt sein, indem der erste, zweite und dritte Profilabschnitt jeweils ein Querschnittsprofil in U-Form umfassen, wobei die Laufschiene einen Verbindungsabschnitt mit beidseitig daran anschliessenden Schenkeln aufweist.

Der Laufwagen ist dazu konfiguriert entlang der Laufschiene in einer Förderrichtung zu laufen und mindestens einen Gegenstand zu fördern. Der Laufwagen umfasst typischerweise einen zum Umgreifen der Laufschiene ausgebildeten U-förmigen Laufwagenkörper, der einen ersten und einen zweiten Schenkel umfasst.

Der erste und der zweiten Schenkel können durch einen Verbindungsabschnitt miteinander verbunden sein, welcher vorzugsweise senkrecht zur Förderrichtung der Laufschiene verläuft. Typischerweise schliessen die Schenkel seitlich an dem Verbindungsabschnitt an, wobei der erste Schenkel auf seiner Innenseite angebrachte erste Rollen und der zweite Schenkel auf seiner Innenseite angebrachte zweite Rollen aufweist.

Für eine hohe Spurtreue kann der Verbindungsabschnitt auf einer, der Laufschiene zugewandten Seite, dritte Rollen aufweisen. Die ersten und zweiten Rollen sind hierbei vorzugsweise stehend (horizontal) angeordnet und die dritten Rollen sind liegend (vertikal) angeordnet.

Die Förderanlage zum Fördern von Gegenständen kann diverse Varianten von Transportvorrichtungen umfassen. Eine als Hängeförderer ausgeführte Transportvorrichtung kann Laufwagen mit Trageelementen aufweisen. Die Trageelemente können beispielsweise in Form von Bügeln, Ösen oder Haken ausgeführt sein. Zum Transport der Gegenstände können an den Trageelementen Taschen in Form von Hängetaschen oder Tragetaschen angeordnet sein.

Zum Transport von Stückgütern kann die Transportvorrichtung als Horizontalförderer ausgeführt sein. Zum Transport der Stückgüter kann der Horizontalförderer Laufwagen umfassen, welche dazu geeignet sind Platten oder Körbe aufzunehmen.

In einer bevorzugten Variante umfasst der Laufwagen mindestens ein sich in Richtung der Mitnehmervorrichtung erstreckendes Eingriffselement. Das Eingriffselement kann mit dem Verbindungsabschnitt und/oder einem der Schenkel des Laufwagens wirkverbunden sein. Alternativ kann das Mitnehmerelement auch integral mit dem Laufwagen ausgebildet sein.

Gute Resultate können erzielt werden, wenn das Eingriffselement ein Formelement aus der Gruppe der folgenden Elemente oder einer Kombination davon ist: Zylinderstifte, Zapfen, Ausbuchtungen, Nocken oder Vorsprung oder Kanten. In einer bevorzugten Variante ist das Mitnehmerelement als ein Zylinderstift ausgeführt, der sich seitlich vom Laufwagen erstreckt. Vorzugsweise erstreckt sich das Mitnehmerelement im Wesentlichen senkrecht zur Förderrichtung der Laufschiene weg vom Laufwagen.

Die Förderanlage umfasst ferner eine zumindest bereichsweise entlang der Laufschiene angeordnete und antreibbare Mitnehmervorrichtung zum Mitnehmen des Laufwagens der Transportvorrichtung. Die Mitnehmervorrichtung kann dazu geeignet sein den mindestens einen Laufwagen zumindest abschnittsweise mitzunehmen, sie umfasst hierzu vorzugsweise eine antreibbare und umlaufende Kette.

In einer bevorzugten Variante umfasst die Mitnehmervorrichtung eine um zwei Ritzel umlaufende und in einer parallel zur Transportvorrichtung angeordneten Kettenführung geführten, angetriebenen Kette. Gute Resultate können erzielt werden, wenn die Kette als Rollen- oder Stiftkette ausgeführt ist.

Die Kette kann um ein Durchhängen oder Auslenken der Kette zu vermeiden in einer Kettenführung geführt sein. Vorzugsweise ist die Kettenführung als Kanal aus einem Kunststoff, wie beispielsweise Polyethylen ausgeführt. Polyethylen hat den Vorteil günstig, relativ abriebfest und selbstschmierend zu sein.

Die Mitnehmervorrichtung umfasst weiterhin mindestens ein Mitnehmerelement mit einer frei drehbaren Mitnehmerrolle, wobei die frei drehbare Mitnehmerrolle mit dem Laufwagen in Eingriff bringbar ist um den Laufwagen dabei entlang der Laufschiene mitzunehmen. Einer der Vorteile einer frei drehbaren Mitnehmerrolle im Vergleich zu hakenförmigen Mitnehmerelementen besteht darin, dass diese sich nicht nur punktuell, sondern gleichmässiger Abnutzen. Auch vorstellbar sind Mitnehmerrollen, welche einen Freilauf umfassen und daher nur in eine Richtung frei drehbar ausgeführt sind.

Die frei drehbare Mitnehmerrolle kann auch derart ausgeführt sein, dass insbesondere die Aussenkontur von einer kreiszylindrischen Form im streng mathematischen Sinne abweicht. So sind beispielsweise Aussenkonturen in Form eins Polygons möglich.

Auch kann die Mantelfläche derart ausgestaltet sein, dass sie keinen durchgängigen Aussendurchmesser aufweist. Die frei drehbare Mitnehmerrolle kann eine Mantelfläche aufweisen, die zwischen einem bezüglich der Achse weiter aussenliegenden und einem bezüglich der Achse weiter innenliegenden Kreis mäandert.

Durch den freien Umlauf der Mitnehmerrolle, ist bei jedem Eingriff ein zufälliger Punkt auf der Mantelfläche der frei drehbaren Mitnehmerrolle im Eingriff mit dem Laufwagen. Der Eingriff der frei drehbaren Mitnehmerrolle erfolgt vorzugsweise temporär. Unter temporär ist die Zeitspanne zu verstehen in der sich die frei drehbare Mitnehmerrolle mit dem Laufwagen im Eingriff befindet.

Weiterhin ermöglicht es eine Mitnehmervorrichtung mit Mitnehmerelementen mit einer frei drehbaren Mitnehmerrolle, ebenfalls die Förderrichtung umzukehren.

Aufgrund der rotationssymmetrischen Kontur der Mitnehmerrolle und der freien Drehbarkeit kann diese in beide Richtungen frei um diese Achse umlaufen und so den jeweiligen Laufwagen mitnehmen.

In einer Variante kann die Mitnehmervorrichtung ein Mitnehmerelement mit einer frei drehbaren Mitnehmerrolle umfassen, welche frei drehbare Mitnehmerrolle sich im blockierten Zustand des Laufwagens in Umfangsrichtung deformiert. Die Mantelfläche der frei drehbaren Mitnehmerrolle kann durch das Eingriffselement des Laufwagens in Umfangsrichtung zumindest bereichsweise temporär derart elastisch deformiert werden, dass der dem Mitnehmerelement zugewanderte Teil der Mantelfläche, am Mitnehmerelement zum Anliegen kommt.

Im Ausgangszustand weist die Mitnehmerrolle vorzugsweise eine in Umfangsrichtung kreisrunde Form auf. Vorzugsweise besteht im nicht deformierten Zustand zwischen der Mantelfläche der frei drehbaren Mitnehmerrolle und dem Mitnehmerelement ein Spalt. Im blockierten Zustand des Laufwagens kann die Mitnehmerrolle durch das Mitnehmerelement entlang der Umfangsrichtung derart temporär deformiert werden, dass die Mitnehmerrolle im deformierten Zustand eine unsymmetrische Form annimmt.

Durch die Deformation kann der, dem Mitnehmerelement zugewanderte Teil der Mantelfläche der Mitnehmerrolle, am Mitnehmerelement zum Anliegen kommen, wodurch mittels eines Reibschlusses die Drehbarkeit temporär unterbunden werden kann. Der Spalt zwischen Mitnehmerrolle und Mitnehmerelement beträgt typischerweise 3mm - 5mm, vorzugsweise 1mm - 3mm.

Das mindestens eine Mitnehmerelement mit einer frei drehbaren Mitnehmerrolle ist in einer bevorzugten Variante mit einer antreibbaren Stiftkette verbindbar. Gute Resultate können erzielt werden, indem das mindestens eine Mitnehmerelement mit mindestens einem Stift der Stiftkette mittels einer Federverbindung verbindbar ist. Hierzu wird vorzugsweise ein Sicherungselement wie eine Sicherungsscheibe oder ein Wellensicherungsring verwendet.

Das Mitnehmerelement kann einen im Wesentlichen C-förmigen Grundkörper aufweisen. Der Grundkörper weist vorzugsweise einen ersten Bereich mit mindestens einer Bohrungen auf, um den Grundkörper mit mindestens einem Stift der Stiftkette zu verbinden. Der mindestens eine Stift der Stiftkette kann hierzu eine umlaufende Nut aufweisen und das mindestens eine Mitnehmerelement kann eine zu der Nut korrespondierende Wulst aufweisen.

Der Grundkörper umfasst vorzugsweise einen zweiten Bereich an welchem eine Achse angeformt sein kann. Für eine einfache Austauschbarkeit, kann die Achse eine Schnappverbindung umfassen, mittels derer die frei drehbare Mitnehmerrolle auf der Achse seitlich arretierbar ist, also axial gesichert ist. Vorzugsweise ist die frei drehbare Mitnehmerrolle radial um die Achse frei drehbar angeordnet, aber axial entlang der Achse lagesicher fixiert. Somit wird verhindert, dass die frei drehbare Mitnehmerrolle beim Eingriff mit einem Laufwagen durch die vom Laufwagen aufgebrachte Kraft in axialer Richtung auf der Achse verrutscht.

Um ein versatzfreies und sauberes Ablaufen der Mitnehmerrolle auf der Achse zu erreichen und somit eine hohe Laufruhe zu gewährleisten, kann die auf der Achse angeordnete frei drehbare Mitnehmerrolle eine Nabe umfassen. Gute Resultate können erzielt werden, wenn die Nabe eine Metallhülse umfasst, welche frei um die Achse des Mitnehmerelements umläuft.

Gute Resultate können erzielt werden, wenn die frei drehbare Mitnehmerrolle elastisch deformierbar ist. Die frei drehbare Mitnehmerrolle kann dadurch mit dem Laufwagen in Eingriff bringbar sein, indem durch eine zumindest bereichsweise temporäre Deformation der frei drehbaren Mitnehmerrolle, ein Kraftschluss zwischen der Mitnehmerrolle und dem Laufwagen herstellbar ist.

Die temporäre Deformation ist üblicherweise eine Deformation der Mantelfläche der frei drehbaren Mitnehmerrolle. Beim Eingriff der frei drehbaren Mitnehmerrolle wird der Kraftschluss durch eine Mischung aus einem temporären Formschluss und einem Reibschluss erzeugt. Zum Mitnehmen eines Laufwagens mittels der Mitnehmervorrichtung wird mindestens ein entlang der Transportvorrichtung bewegbares Mitnehmerelements mit mindestens einem Laufwagen in Eingriff gebracht.

Die Passung zwischen Achse und frei drehbarer Mitnehmerrolle, sowie die Härte des Materials der Mitnehmerrolle sind derart gewählt, dass die frei drehbare Mitnehmerrolle den Laufwagen in einem nicht blockierten Zustand mitnimmt. Der Kraftschluss zwischen der frei drehbaren Mitnehmerrolle und dem Laufwagen wird dadurch erreicht, indem sich die frei drehbare Mitnehmerrolle bereichsweise temporär deformiert. Die Form der lokalen Deformation der frei drehbaren Mitnehmerrolle ergibt sich aus der Geometrie des Eingriffselements des Laufwagens. Vorzugsweise kann die Form der lokalen Deformation eine partielle Einbuchtung sein. Nach dem Freigeben des Laufwagens kehrt die frei drehbare Mitnehmerrolle im Wesentlichen in den Ausgangszustand zurück.

In einer Variante wird in einem blockierten Zustand des Laufwagens, beispielsweise durch ein Stoppelement an einer Arbeitsstation, die frei drehbare Mitnehmerrolle bereichsweise derart deformiert, dass die frei drehbare Rolle über das Eingriffselement des Laufwagens hinwegrollt ohne den Laufwagen mitzunehmen. Hinwegrollen bezeichnet hierbei das Abrollen der frei drehbaren Mitnehmerrolle am Eingriffselement des Laufwagens. In einem nicht deformierten Ausgangszustand ist die Mantelfläche der frei drehbaren Mitnehmerrolle im Wesentlichen zylinderförmig. Wird die Mantelfläche mit einem blockierten Laufwagen in Eingriff gebracht, wird die Mantelfläche vorzugsweise durch das Eingriffselement des Laufwagens elastisch deformiert. Die Rolle kann jedoch auch ohne ein dezidiertes Eingriffselement des Laufwagens mit dem Laufwagen in Eingriff gebracht werden. So kann die frei drehbare Mitnehmerrolle mit dem U-förmigen Laufwagenkörper, beispielsweise mit dem einen ersten und/oder einen zweiten Schenkel in Eingriff gebracht werden. Nach dem Hinwegrollen über das Eingriffselement des Laufwagens kehrt die Mantelfläche der frei drehbaren Mitnehmerrolle im Wesentlichen in den zylinderförmigen Ausgangszustand zurück.

Gute Resultate können erzielt werden, wenn die frei drehbare Mitnehmerrolle im Wesentlichen aus einem elastisch deformierbaren Schaumkunstoff bestehen. In einer bevorzugten Variante besteht die frei drehbare Mitnehmerrolle aus Polyurethan. Einer der Vorteile einer frei drehbaren Mitnehmerrolle im Gegensatz zu einem hakenförmigen Mitnehmerelement besteht darin, dass die Mitnehmerrolle sich nicht nur lokal abnutzt. Aufgrund der freien Drehbarkeit ist bei jedem Eingriff mit dem Laufwagen ein anderer Punkt auf der Mantelfläche der frei drehbaren Mitnehmerrolle mit dem Laufwagen im Eingriff. Eine frei drehbare Mitnehmerrolle hat daher eine längere Lebensdauer als hakenförmige Mitnehmerelemente.

Um im Verschleissfall oder im Störungsfall einzelne Mitnehmerelemente schnell und unkompliziert lösen zu können, sind diese vorzugsweise mittels der Nut und Feder Verbindung mit der Kette verbunden. Um ein Mitnehmerelement effizient von der Kette lösen zu können, kann das mindestens eine Mitnehmerelement einen Aufnahmeraum aufweisen. Der Aufnahmeraum kann beispielsweise als eine Nut ausgeführt sein, welche am Grundkörper des mindestens einen Mitnehmerelements angeordnet ist.

Gute Resultate können erzielt werden, wenn der Aufnahmeraum durch die Stiftkette begrenzt wird. Ein derartiger Aufnahmeraum, welcher im montierten Zustand von dem mit der Kette verbundenen Mitnehmerelement, von der Nut des Mitnehmerelements und der Kette gebildet wird, kann zur Aufnahme eines Werkzeugs dienen. Der Aufnahmeraum kann dazu konfiguriert sein ein Werkzeug aufzunehmen um das Mitnehmerelement mittels des Werkzeugs von der Stiftkette zu lösen. Vorzugsweise wird das Mitnehmerelement von der Stiftkette abgehebelt. Dies kann beispielsweise mittels eines handelsüblichen Schraubendrehers erfolgen.

### LISTE DER FIGUREN

Anhand der in den nachfolgenden Figuren gezeigten Ausführungsbeispiele und der dazugehörigen Beschreibung werden Aspekte der Erfindung näher erläutert. Es zeigen:
- Fig. 1: Eine perspektivische Seitenansicht eines Ausführungsbeispiels der Förderanlage;
- Fig. 2: Eine perspektivische Draufsicht auf ein Mitnehmerelement des Ausführungsbeispiels der Förderanlage nach Figur 1 mit einer frei drehbaren Mitnehmerrolle;;
- Fig. 3: Eine Draufsicht des Ausführungsbeispiels der Förderanlage nach Figur 1;
- Fig. 4a - 4c: Das Hinwegrollen der frei drehbaren Mitnehmerrolle des Mitnehmerelementes des Ausführungsbeispiels der Förderanlage nach Figur 2;
- Fig. 5: Eine Schnittdarstellung eines Ausführungsbeispiels des Mitnehmerelements mit einer frei drehbaren Mitnehmerrolle;
- Fig. 6: Eine Schnittdarstellung eines zweiten Ausführungsbeispiels des Mitnehmerelements mit einer frei drehbaren Mitnehmerrolle;
- Fig. 7: Eine Seitenansicht eines dritten Ausführungsbeispiels des Mitnehmerelements mit einer frei drehbaren Mitnehmerrolle im nicht blockierten Zustand des Laufwagens;
- Fig. 8: Eine Seitenansicht des dritten Ausführungsbeispiels des Mitnehmerelements nach Figur 7 im blockierten Zustand des Laufwagens.
- Fig. 9: Eine Seitenansicht eines vierten Ausführungsbeispiels des Mitnehmerelements mit einer polygonförmigen frei drehbaren Mitnehmerrolle im nicht blockierten Zustand des Laufwagens;
- Fig. 10: Eine Seitenansicht eines dritten Ausführungsbeispiels des Mitnehmerelements mit einer frei drehbaren Mitnehmerrolle mit asymmetrischer Mantelfläche im nicht blockierten Zustand des Laufwagens.

### DARSTELLUNG DER AUSFÜHRUNGSBEISPIELE

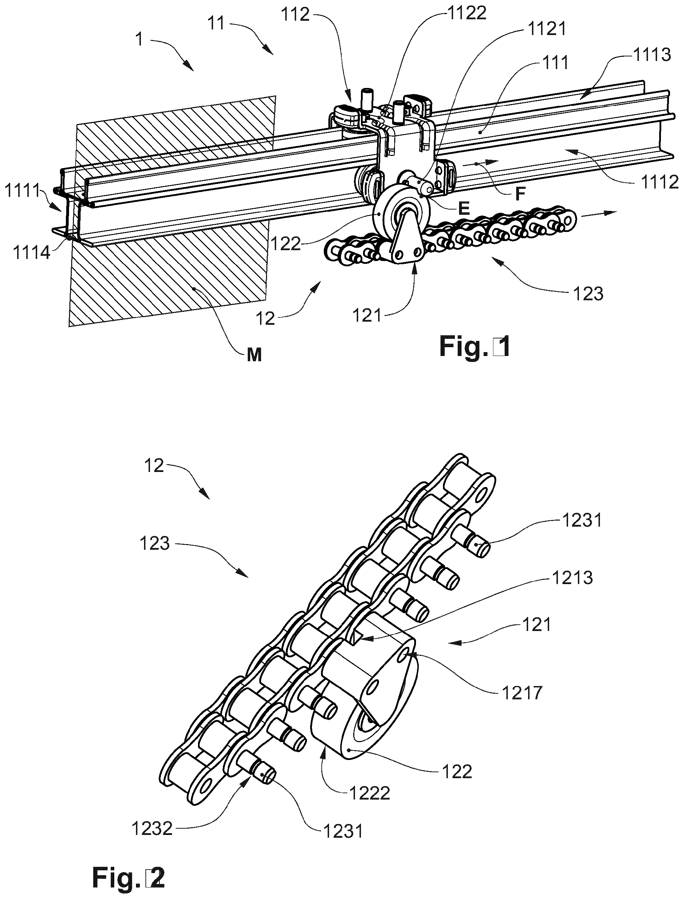

**Figur 1** zeigt ein Ausführungsbeispiel der Förderanlage 1 zum Fördern von Gegenständen. Die gezeigte Förderanlage 1 kann als Horizontalföderer zum Fördern von Platten oder Schalen verwendet werden. Aufgrund der Geometrie der Laufschiene 111 läuft der damit im Eingriff befindliche Laufwagen 112 kippsicher auf der Laufschiene 111 ab.

Die gezeigte Förderanlage 1umfasst somit eine Transportvorrichtung 11 zum Transport von Gegenständen entlang einer vorgegebenen Strecke. Die gezeigte Transportvorrichtung 11 umfasst mindestens eine Laufschiene 111 sowie wenigstens einen an der Laufschiene 111 anbringbaren Laufwagen 112. Die gezeigte Laufschiene 111 umfasst ein Querschnittsprofil, mit wenigstens drei miteinander verbundenen Profilabschnitten 1111, 1112, 1113. Der erste 1111 und der zweite 1112 Profilabschnitt der Laufschiene 111 sind spiegelsymmetrisch zu einer entlang einer vertikalen Mittelebene M der Laufschiene 111 angeordnet. Die gezeigte Laufschiene 111 kann hierbei einstückig ausgebildet sein und durch Biegen eines Metallbandes oder eines Metallstreifens hergestellt sein, indem der erste 1111, zweite 1112 und dritte 1113 Profilabschnitt jeweils ein Querschnittsprofil in U-Form umfassen, wobei die Laufschiene 111 einen Verbindungsabschnitt 1114 mit beidseitig daran anschliessenden Schenkeln 1115 aufweist.

Der Laufwagen 112 ist dazu konfiguriert entlang der Laufschiene 111 in einer Förderrichtung F zu laufen und mindestens einen Gegenstand zu fördern. Der Laufwagen 112 des gezeigten Ausführungsbeispiels umfasst einen zum Umgreifen der Laufschiene 111 ausgebildeten U-förmigen Laufwagenkörper 1122, der einen ersten 1123 und einen zweiten Schenkel 1124 umfasst. Der erste Schenkel 1123 weist auf seiner Innenseite angebrachte erste Rollen und der zweite Schenkel 1124 auf seiner Innenseite angebrachte zweite Rollen auf.

Die beiden Schenkel 1123, 1124 sind hierbei mittels eines Verbindungsabschnitts 1125 verbunden. Für eine hohe Spurtreue kann der Verbindungsabschnitt 1125 auf einer, der Laufschiene 111 zugewandten Seite, dritte Rollen aufweisen. Die gezeigte zumindest bereichsweise entlang der Laufschiene 111 angeordnete und antreibbare Mitnehmervorrichtung 12 zum Mitnehmen des Laufwagens 112 der Transportvorrichtung 11 umfasst mindestens ein Mitnehmerelement 121 mit einer frei drehbaren Mitnehmerrolle 122, wobei die frei drehbare Mitnehmerrolle 122 mit dem Laufwagen 112 in Eingriff E bringbar ist um den Laufwagen 112 dabei entlang der Laufschiene 111 mitzunehmen.

**Figur 2** zeigt ein Ausführungsbeispiel des Mitnehmerelements 121, welches einen Aufnahmeraum 1213 umfasst und mit einer Stiftkette 123 verbunden ist. Wie aus der Figur zu erkennen ist, wird der als Nut ausgeführte Aufnahmeraum 1213 durch die Stiftkette 123 begrenzt.

Der Aufnahmeraum 1213 ist dazu konfiguriert ein Werkzeug aufzunehmen um das Mitnehmerelement 121 mittels des Werkzeugs von der Stiftkette 123 zu lösen, vorzugsweise indem das Mitnehmerelement 121 von der Stiftkette abgehebelt wird. Im Verschleissfall können einzelne Mitnehmerelemente 121 somit schnell und unkompliziert gelöst werden. Vorzugsweise kann das Mitnehmerelement 121 mittels eines handelsüblichen Schraubendrehers von der Stiftkette 123 abgelöst werden.

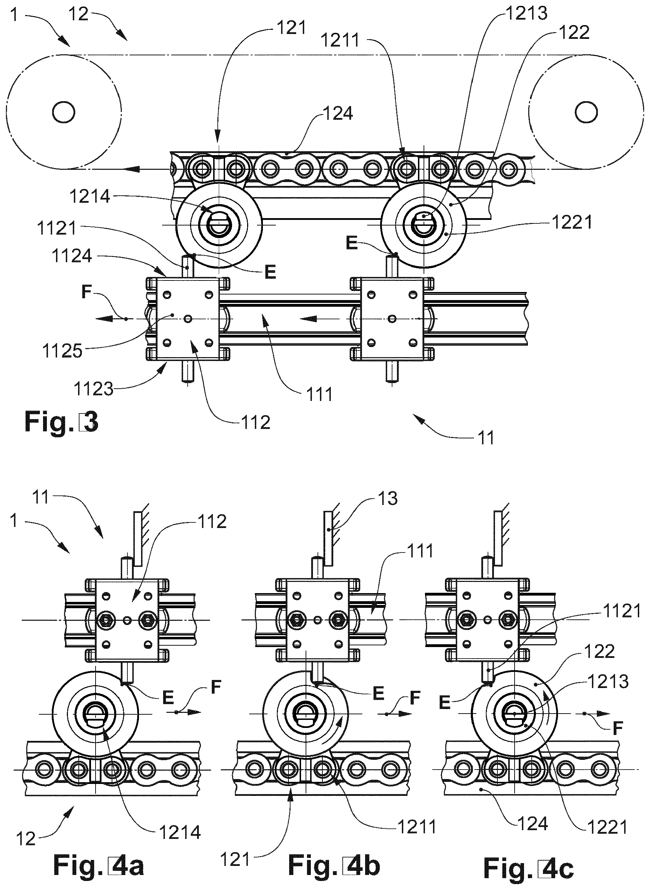

**Figur 3** zeigt eine Draufsicht auf das Ausführungsbeispiel der Förderanlage 1. Die gezeigte Förderanlage 1 umfasst eine zumindest bereichsweise entlang der Laufschiene 111 angeordnete und antreibbare Mitnehmervorrichtung 12 mit einer Vielzahl mit Stiften 1231 der umlaufenden Stiftkette 123 verbundenen Mitnehmerelementen 121 zum Mitnehmen der Laufwagens 112 der Transportvorrichtung 11.

Gute Resultate können erzielt werden, wenn die Kette als Rollen- oder Stiftkette 123 ausgeführt ist. Die gezeigten Mitnehmerelemente 121 umfassen frei drehbare Mitnehmerrollen 122, welche mit dem Laufwagen 112 in Eingriff E bringbar sind um den Laufwagen 112 dabei entlang der Laufschiene 111 in Förderrichtung F mitzunehmen. Wie Figur 3 zu entnehmen ist, sind die gezeigten frei drehbaren Mitnehmerrollen 122 elastisch deformierbar und dadurch mit dem Laufwagen 112 in Eingriff E bringbar, indem durch eine zumindest bereichsweise temporäre Deformation der frei drehbaren Mitnehmerrolle 122, vorzugsweise in Form einer partiellen Einbuchtung, ein Kraftschluss zwischen der Mitnehmerrolle 122 und dem Laufwagen 112 herstellbar ist.

Der Eingriff E wird hierbei durch mindesten ein in Richtung der Mitnehmervorrichtung 12 abstehendes Eingriffselement 1121 erreicht. Das Eingriffselement 1121 ist vorzugsweise ein Formelement aus der Gruppe der folgenden Elemente oder einer Kombination davon: Zylinderstifte, Zapfen, Ausbuchtungen, Nocken oder Vorsprung oder Kanten. Im gezeigten Ausführungsbeispiel ist das Eingriffselement 1121 als Zylinderstift ausgeführt, welcher mit dem Laufwagen verbunden oder an diesem integral angeformt ist.

**Figuren 4a - 4c** zeigen wie die mindestens eine frei drehbare Mitnehmerrolle 122 im blockierten Zustand des Laufwagens 112 über das Eingriffselement 1121 abrollt, ohne den Laufwagen 112 mitzunehmen. Die gezeigte frei drehbare Mitnehmerrolle 122 ist elastisch deformierbar und durch eine zumindest bereichsweise temporäre Deformation der frei drehbaren Mitnehmerrolle122 wird ein Kraftschluss zwischen der Mitnehmerrolle 122 und dem Laufwagen 112 erreicht.

Die Passung zwischen der Achse 1212 und der frei drehbarer Mitnehmerrolle 122, sowie die Härte des Materials der frei drehbaren Mitnehmerrolle 122 sind derart gewählt, dass die frei drehbare Mitnehmerrolle 122 den Laufwagen 112 in einem nicht blockierten Zustand mitnimmt. In einem blockierten Zustand des Laufwagens 112, beispielsweise durch ein Stoppelement 13 an einer Arbeitsstation, wie in den Figuren 4a bis 4c gezeigt, wird die frei drehbare Mitnehmerrolle 122 bereichsweise derart deformiert, dass sie über das Eingriffselement 1121 des Laufwagens 112 hinwegrollt ohne den Laufwagen 112 mitzunehmen.

Nach dem Hinwegrollen über das Eingriffselement 1121 des Laufwagens 112 kehrt die frei drehbare Mitnehmerrolle 112 ebenfalls im Wesentlichen in den Ausgangszustand zurück. Einer der Vorteile einer frei drehbaren Mitnehmerrolle 122 im Gegensatz zu einem hakenförmigen Mitnehmerelement besteht darin, dass sich die frei drehbare Mitnehmerrolle 122 nicht ausschliesslich lokal abnutzt. Aufgrund der freien Drehbarkeit ist bei jedem Eingriff E mit dem Laufwagen 112 ein anderer Punkt auf der Mantelfläche 1222 der frei drehbaren Mitnehmerrolle 122 mit dem Laufwagen 112 im Eingriff E. Eine frei drehbare Mitnehmerrolle 112 hat daher eine längere Lebensdauer als hakenförmige Mitnehmerelemente.

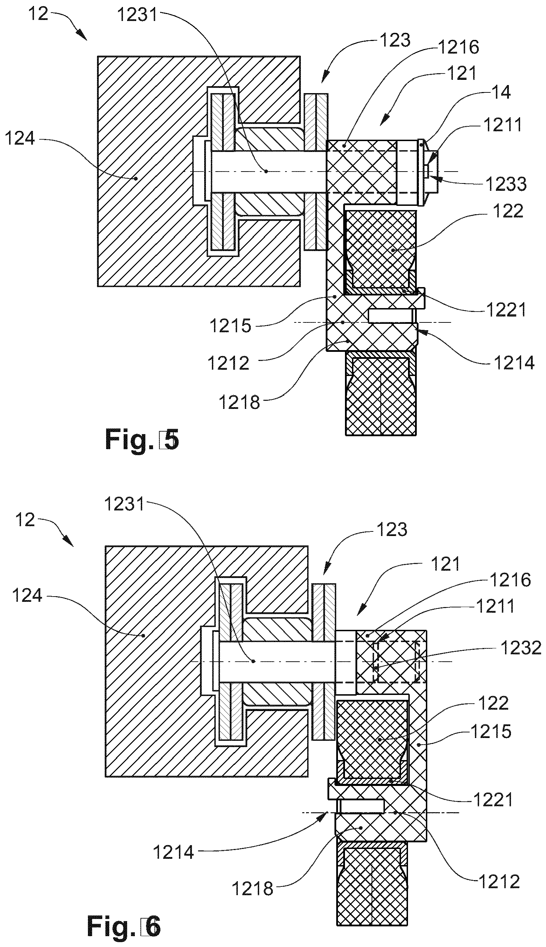

**Figuren 5 und 6** zeigen zwei Ausführungsbeispiele des mindestens einen Mitnehmerelements 121. Die gezeigten Ausführungsbeispiele des Mitnehmerelements 121 weisen einen im Wesentlichen C-förmigen Grundkörper 1215 auf. Der Grundkörper 1215 weist einen ersten Bereich 1216 mit mindestens einer Bohrung 1217 auf, um den Grundkörper 1215 mit mindestens einem Stift 1231 der Stiftkette 123 zu verbinden. Wie in **Figur 5** gezeigt, kann der mindestens eine Stift 1231 der Stiftkette 123 eine Aufnahme 1233 umfassen und das mindestens eine Mitnehmerelement 121 mittels eines Sicherungselements 14 derart arretiert werden, indem dieses in die Aufnahme 1233 eingesetzt wird. Alternativ kann wie in **Figur 6** gezeigt, der mindestens eine Stift 1231 der Stiftkette 123 eine umlaufende Nut 1232 umfassen und das mindestens eine Mitnehmerelement 121 kann eine zu der Nut 1232 korrespondierende Wulst 1211 umfassen.

In beiden Ausführungsbeispielen umfasst der Grundkörper 1215 vorzugsweise einen zweiten Bereich 1218 an welchem eine Achse 1212 angeformt ist. Für eine einfache Austauschbarkeit, ist die gezeigte frei drehbare Mitnehmerrolle 122 jeweils mittels einer Schnappverbindung 1214 mit der Achse 1212 des Mitnehmerelements 121 wirkverbindbar. Um ein sauberes Ablaufen der frei drehbaren Mitnehmerrolle 122 auf der Achse 1212 zu erreichen und somit eine hohe Laufruhe zu gewährleisten, umfassen die gezeigten frei drehbaren Mitnehmerrollen 122 jeweils eine auf der Achse 1212 angeordnete Nabe 1221. Die Nabe 1221 ist vorzugsweise als eine Metallhülse ausgeführt, welche frei um die Achse 1212 des Mitnehmerelements 121 umläuft.

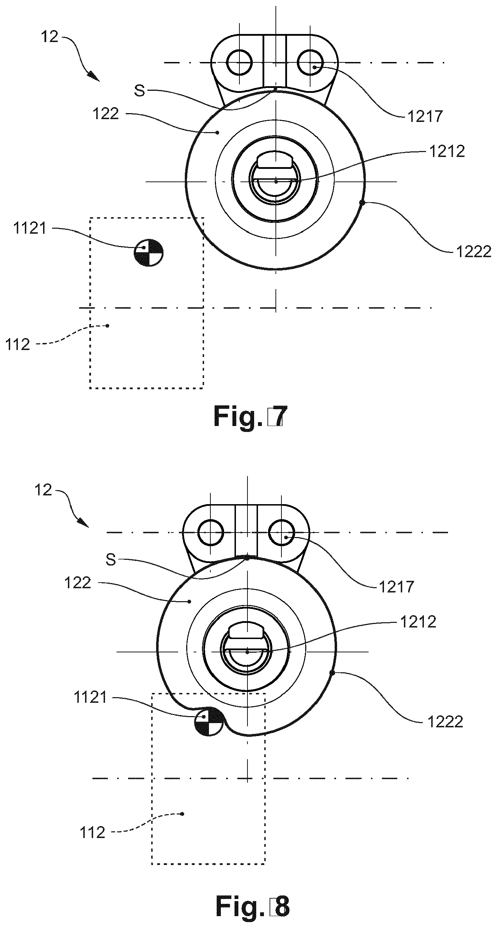

**Figuren 7 und 8** zeigen eine Seitenansicht eines dritten Ausführungsbeispiels des Mitnehmerelements mit einer frei drehbaren Mitnehmerrolle im nicht blockierten Zustand des Laufwagens in **Figur 7** und im blockierten Zustand des Laufwagens in **Figur 8****.** Die Mantelfläche 1222 des gezeigten Ausführungsbeispiels der frei drehbaren Mitnehmerrolle 122 wird durch das Eingriffselement 1121 des Laufwagens 112 in Umfangsrichtung der frei drehbaren Mitnehmerrolle 122 zumindest bereichsweise temporär derart elastisch deformiert, dass der dem Mitnehmerelement 121 zugewanderte Teil der Mantelfläche 1222 am Mitnehmerelement 121 zum Anliegen kommt. Wie in **Figur 8** ersichtlich ist, kommt hierdurch der, dem Mitnehmerelement 121 zugewanderte Teil der Mantelfläche 1222, am Mitnehmerelement 121 zum Anliegen und durch einen Reibschluss wird die Drehbarkeit temporär unterbunden.

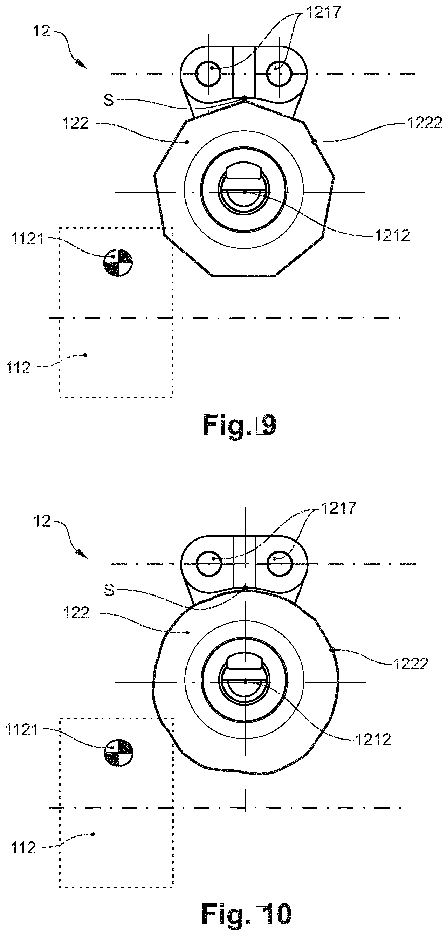

**Figuren 9 und 10** zeigen eine Seitenansicht eines vierten und fünften Ausführungsbeispiels des Mitnehmerelements mit einer frei drehbaren Mitnehmerrolle in Form einer polygonförmigen Mitnehmerrolle in **Figur 9** und in Form einer asymmetrischen Mitnehmerrolle in **Figur 10****.** Wie aus den Figuren zu erkennen ist, besteht im nicht deformierten Zustand der Mitnehmerrolle 122 zwischen der Mantelfläche 1222 der frei drehbaren Mitnehmerrolle 122 und dem Mitnehmerelement 121 ein Spalt S. Im blockierten Zustand des Laufwagens 112 kann die Mitnehmerrolle 122 durch das Mitnehmerelement 121 entlang der Umfangsrichtung derart temporär deformiert werden, dass die Mitnehmerrolle 122 im deformierten Zustand eine unsymmetrische Form annimmt. Im blockierten Zustand des Laufwagens 112 wird die Mantelfläche 1222 der gezeigten Ausführungsbeispiele der frei drehbaren Mitnehmerrollen 122durch das jeweilige Eingriffselement 1121 des Laufwagens 112 in Umfangsrichtung der frei drehbaren Mitnehmerrolle 122 zumindest bereichsweise temporär derart elastisch deformiert, dass der dem Mitnehmerelement 121 zugewanderte Teil der Mantelfläche 1222 zumindest bereichsweise am Mitnehmerelement 121 zum Anliegen kommt.

## Patentansprüche

1. Förderanlage (1) zum Fördern von Gegenständen, umfassend eine Transportvorrichtung (11) zum Transport von Gegenständen entlang einer vorgegebenen Strecke, welche mindestens eine Laufschiene (111) sowie wenigstens einen an der Laufschiene (111) anbringbaren Laufwagen (112) umfasst, welcher dazu konfiguriert ist entlang der Laufschiene (111) in einer Förderrichtung (F) zu laufen und mindestens einen Gegenstand zu fördern, sowie eine zumindest bereichsweise entlang der Laufschiene (111) angeordnete und antreibbare Mitnehmervorrichtung (12) zum Mitnehmen des Laufwagens (112) der Transportvorrichtung (11), welche mindestens ein Mitnehmerelement (121) mit einer frei drehbaren Mitnehmerrolle (122) umfasst, wobei die frei drehbare Mitnehmerrolle (122) mit dem Laufwagen (112) in Eingriff (E) bringbar ist um den Laufwagen (112) dabei entlang der Laufschiene (111) mitzunehmen.

2. Förderanlage (1) nach Anspruch 1, **dadurch gekennzeichnet, dass** die frei drehbare Mitnehmerrolle (122) elastisch deformierbar ist und dadurch mit dem Laufwagen (112) in Eingriff (E) bringbar ist, indem durch eine zumindest bereichsweise temporäre Deformation der frei drehbaren Mitnehmerrolle (122), vorzugsweise in Form einer partiellen Einbuchtung, ein Kraftschluss zwischen der Mitnehmerrolle (122) und dem Laufwagen (112) herstellbar ist.

3. Förderanlage (1) nach einem der Ansprüche 1 oder 2, **dadurch gekennzeichnet, dass** die Mantelfläche (1222) der frei drehbaren Mitnehmerrolle (122) (122) durch das Eingriffselement (1121) des Laufwagens (112) in Umfangsrichtung der frei drehbaren Mitnehmerrolle (122) (122) zumindest bereichsweise temporär derart elastisch deformierbar ist, dass der dem Mitnehmerelement (121) zugewanderte Teil der Mantelfläche (1222) mit dem Mitnehmerelement (121) in Eingriff bringbar ist.

4. Förderanlage (1) nach Anspruch 3, **dadurch gekennzeichnet, dass** der dem Mitnehmerelement (121) zugewanderte Teil der Mantelfläche (1222) derart mit dem Mitnehmerelement (121) in Eingriff bringbar ist, dass durch einen Reibschluss die Drehbarkeit temporär unterbindbar ist.

5. Förderanlage (1) nach einem der vorhergehenden Ansprüche, **dadurch gekennzeichnet, dass** der Laufwagen (112) mindestens ein Eingriffselement (1121) umfasst, vorzugsweise ein Formelement aus der Gruppe der folgenden Elemente oder einer Kombination davon: Zylinderstifte, Zapfen, Ausbuchtungen, Nocken oder Vorsprung oder Kanten.

6. Förderanlage (1) nach einem der vorhergehenden Ansprüche, **dadurch gekennzeichnet, dass** die Mitnehmervorrichtung (12) eine antreibbare Stiftkette (123) umfasst, wobei das mindestens eine Mitnehmerelement (121) mit der Stiftkette (123) verbindbar ist, vorzugsweise indem das mindestens eine Mitnehmerelement (121) mit mindestens einem Stift (1231) der Stiftkette (123) mittels einer Federverbindung verbindbar ist.

7. Förderanlage (1) nach einem der vorhergehenden Ansprüche, **dadurch gekennzeichnet, dass** der mindestens eine Stift (1231) der Stiftkette (123) eine umlaufende Nut (1232) umfasst und das mindestens eine Mitnehmerelement (121) eine zu der Nut (1232) korrespondierende Wulst (1211) umfasst.

8. Förderanlage (1) nach einem der vorhergehenden Ansprüche, **dadurch gekennzeichnet, dass** das mindestens eine Mitnehmerelement (121) einen Aufnahmeraum (1212) umfasst, welcher durch die Stiftkette (123) begrenzt wird und dazu konfiguriert ist ein Werkzeug aufzunehmen um das Mitnehmerelement (121) mittels des Werkzeugs von der Stiftkette (123) zu lösen, vorzugsweise indem das Mitnehmerelement (121) von der Stiftkette abgehebeltwird.

9. Förderanlage (1) nach einem der vorhergehenden Ansprüche, **dadurch gekennzeichnet, dass** die frei drehbare Mitnehmerrolle (122) im Wesentlichen aus einem elastisch deformierbaren Schaumkunstoff, vorzugweise Polyurethan besteht.

10. Förderanlage (1) nach einem der vorhergehenden Ansprüche, **dadurch gekennzeichnet, dass** die frei drehbare Mitnehmerrolle (122) eine Nabe (1221) umfasst, welche vorzugweise eine Metallhülse umfasst, welche um die Achse (1212) des Mitnehmerelements (121) frei umläuft.

11. Förderanlage (1) nach einem der vorhergehenden Ansprüche, **dadurch gekennzeichnet, dass** die frei drehbare Mitnehmerrolle (122) mittels einer Schnappverbindung (1214) mit einer Achse (1212) des Mitnehmerelements (121) wirkverbindbar ist.

12. Mitnehmervorrichtung (12) zum Mitnehmen eines Laufwagens (112) einer Transportvorrichtung (11), welche Transportvorrichtung (11) zum Transport von Gegenständen entlang einer vorgegebenen Strecke mindestens eine Laufschiene (111) sowie wenigstens einen an der Laufschiene (111) anbringbaren Laufwagen (112) umfasst, welcher dazu konfiguriert ist entlang der Laufschiene (111) in einer Förderrichtung (F) zu laufen und mindestens einen Gegenstand zu fördern, wobei die Mitnehmervorrichtung (12) antreibbar ist und zumindest bereichsweise entlang der Laufschiene (111) angeordnete ist und zum Mitnehmen des Laufwagens (112) der Transportvorrichtung (11) mindestens ein Mitnehmerelement (121) mit einer frei drehbaren Mitnehmerrolle (122) umfasst, wobei die frei drehbare Mitnehmerrolle (122) mit dem Laufwagen (112) in Eingriff (E) bringbar ist um den Laufwagen (112) dabei entlang der Laufschiene (111) mitzunehmen.

13. Verfahren zum Fördern von Gegenständen entlang einer Förderrichtung (F) umfassend die folgenden Schritte
a. Bereitstellen einer Förderanlage (1), welche eine Transportvorrichtung (11) und eine Mitnehmervorrichtung (12) umfasst;
b. In Eingriff (E) bringen mindestens eines entlang der Transportvorrichtung (11) bewegbaren Mitnehmerelements (121) mit mindestens einem Laufwagen (112), welches Mitnehmerelement (121) eine frei drehbare Mitnehmerrolle (122) umfasst, welche
i. in einem nicht blockierten Zustand des Laufwagens (112) den Laufwagen (112) mitnimmt, und
ii. in einem blockierten Zustand des Laufwagens (112) bereichsweise deformiert wird und über das Eingriffselement (1121) des Laufwagens (112) hinwegrollt ohne den Laufwagen (112) mitzunehmen.

14. Verfahren zum Fördern von Gegenständen nach Anspruch 13, **dadurch gekennzeichnet, dass** die Mantelfläche (1222) der frei drehbaren Mitnehmerrolle (122) in einem nicht deformierten Ausgangszustand mit einem blockierten Laufwagen (112) in Eingriff (E) gebracht wird und die Mantelfläche (1222) durch das Eingriffselement (1121) des Laufwagens (112) elastisch deformiert wird und nach dem Hinwegrollen über das Eingriffselement (1121) des Laufwagens (112) im Wesentlichen wieder in den Ausgangszustand zurückkehrt.
